# EUROPEAN PATENT APPLICATION

(11) **EP 4 826 667 A1**
(43) Date of publication of application: **21.10.2026**
(21) Application number: 25305542.0
(22) Date of filing: 15.04.2025
(51) Int. Cl.: G06T 17/00, H04N 21/00

(54) **GENERATION OF OBJECT-BASED 3D GAUSSIAN MODEL FROM LOCAL SURFACE REPRESENTATIONS AND SIGNALING**

(71) Applicant: InterDigital CE Patent Holdings, SAS, 75017 Paris (FR)
(72) Inventor: CHUPEAU, Bertrand, 35700 RENNES (FR); SABATER, Neus, 35830 BETTON (FR); SANDRI, Gustavo, 35510 CESSON-SEVIGNE (FR); THUDOR, Franck, 35000 RENNES (FR); KRIVOKUCA, Maja, 35000 RENNES (FR)
(74) Representative: Vossius & Partner Patentanwälte Rechtsanwälte mbB

(57) **Abstract**

Systems and methods for encoding and decoding 3D Gaussian splatting, 3DGS models. An example method comprises: obtaining a plurality of input images of a scene; obtaining at least a first representation of a first surface in the scene; and generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

## Description

### BACKGROUND

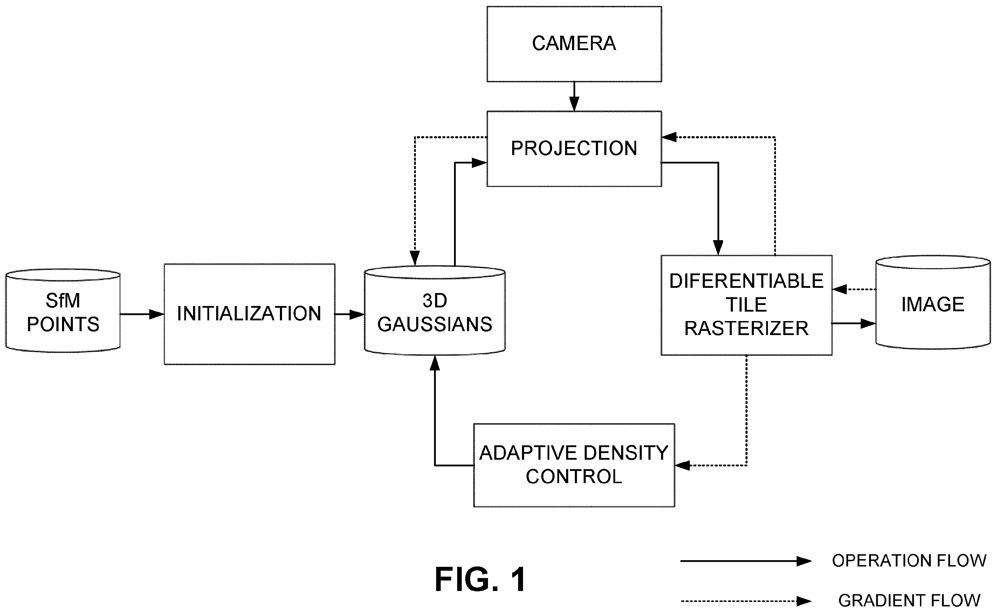

The present application is related to 3D Gaussian splatting (3DGS). In recent years, different volumetric representations have been proposed to be used in the context of New View Generation (NVG). New View Generation is the generation of new views from arbitrary viewing angles of a scene when only a limited number of input views have been captured. 3D Gaussian splatting (3DGS) has emerged as a new scene representation that is able to realistically render volumetric data from a multi-view capture with high quality. It is described in, for example, B. Kerbl et al., "3D Gaussian Splatting for Real-Time Radiance Field Rendering", ACM Transactions on Graphics (TOG), vol. 42, No. 4, July 2023. Some potential benefits of 3DG splatting are that it can avoid unnecessary computation in the empty space, and it can allow for real-time rendering and a fast training time. Gaussian splatting has been used in the past in the computer graphics community, and recently, with the use of machine learning and the arrival of very powerful GPUs, new learning techniques have become popular. 3DGS represents a scene as a collection of 3D ellipsoid primitives, each of which is parameterized as a Gaussian function that allows stretching, scaling and rotation by different amounts and in different directions in 3D space. Each 3D Gaussian primitive also has color values associated with different viewing directions in 3D space, as well as an opacity coefficient that controls its transparency. A functional block diagram providing an overview of 3DGS model generation as described in Kerbl et al. is provided in FIG. 1.

While 3DGS is good at producing high-quality, realistic renderings of 3D scenes, the collection of 3D Gaussian primitives themselves does not usually form a natural, clean surface structure for the 3D objects in the scene. This is because the main goal of 3DG has so far been to obtain realistic renderings of 3D scenes that look good on a 2D display, not necessarily to obtain geometric 3D models of objects or scenes that can later be manipulated or edited by a user.

### SUMMARY

Briefly stated, in one embodiment, a method comprises: obtaining a plurality of input images of a scene; obtaining at least a first representation of a first surface in the scene; and generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

An apparatus according to some embodiments comprises one or more processors configured to perform at least: obtaining a plurality of input images of a scene; obtaining at least a first representation of a first surface in the scene; and generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

In some embodiments, the first representation is a 3D mesh.

In some embodiments, generating the 3DGS model comprises: setting initial positions for a plurality of Gaussian primitives, the Gaussian primitives including a plurality of Gaussian primitives in the first set, the Gaussian primitives in the first set having initial positions on the first surface; and iteratively refining positions of the Gaussian primitives to lower a loss function, wherein the loss function is based at least in part on a fidelity of the 3DGS model to the input images and on distances from the first surface to the Gaussian primitives in the first set.

In some embodiments, the distances from the first surface to the Gaussian primitives in the first set are determined based on distances along respective normal directions to the first surface. In other embodiments, the distances from the first surface to the Gaussian primitives in the first set are determined based on distances to respective nearest vertices on the first surface.

Some embodiments further comprise encoding the 3DGS model in a bitstream. Some such embodiments further comprise encoding in the bitstream information identifying which of the the Gaussians are in the first set.

In some embodiments, the first representation is also encoded in the bitstream. In other embodiments, the first representation is not encoded in the bitstream.

Some embodiments further comprise: obtaining a second representation of a second surface in the scene; wherein the 3DGS model includes a second set of Gaussian primitives associated with the second surface; and wherein the generating of the 3DGS model further includes constraining the Gaussian primitives in the second set to have positions in proximity to the second surface.

In some embodiments, a third set of Gaussian primitives in the 3DGS model are not constrained to have positions in proximity to any surface in the scene.

A method according to some embodiments comprises: decoding from a bitstream an initial 3D Gaussian splatting, 3DGS, model of a scene, the model comprising a plurality of Gaussian primitives; decoding from the bitstream information associating a first set of the Gaussian primitives with a first object; and generating an extracted 3DGS model of the first object using the Gaussian primitives in the first set.

An apparatus according to some embodiments comprises one or more processors configured to perform at least: decoding from a bitstream an initial 3D Gaussian splatting, 3DGS, model of a scene, the model comprising a plurality of Gaussian primitives; decoding from the bitstream information associating a first set of the Gaussian primitives with a first object; and generating an extracted 3DGS model of the first object using the Gaussian primitives in the first set.

In some embodiments, the bitstream includes information associating a respective object label with each of the Gaussian primitives; wherein the information associating the first set of the Gaussian primitives with the first object comprises an object label that identifies the first object; wherein a second set of the Gaussian primitives is associated with an object label that identifies a second object; and wherein a third set of the Gaussian primitives is associated with an object label indicating that the Gaussians in the third set are not associated with any object.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 is a functional block diagram providing an overview of 3DGS model generation as described in Kerbl et al. Refinement starts with the sparse structure from motion (SfM) point cloud and creates a set of 3D Gaussians. Refinement of this set of Gaussians follows, with adaptive control of the density.
FIG. 2 is a schematic illustration of the collection of information that may be used as an input to a 3DGS model according to some embodiments.
FIG. 3 is a schematic illustration of initial Gaussian primitive positions as used to initialize a 3DGS refinement process.
FIG. 4 is a schematic illustration of a displacement between an initial Gaussian position and a refined Gaussian position.
FIG. 5 is a schematic illustration of a distance between a refined Gaussian position and a nearest surface vertex, which may be used as an input to the calculation of a loss function in some embodiments.
FIG. 6 is a schematic illustration of a distance between a refined Gaussian position and a nearest surface point, measured along a normal, which may be used as an input to the calculation of a loss function in some embodiments.
FIG. 7 is a schematic illustration of a 3DGS model after refinement according to some embodiments, with some Gaussian primitives being constrained to remain in proximity to the mesh surface and other "free" Gaussian primitives having other positions in the model.
FIG. 8 is a functional block diagram illustrating 3DGS model transmission according to some embodiments, including transmission of information associating Gaussian primitives with surfaces as appropriate.
FIG. 9 is a flow diagram of a 3DGS encoding method according to some embodiments.
FIG. 10 is a flow diagram of a 3DGS decoding method according to some embodiments.
FIG. 11 is a functional block diagram of an apparatus that may be used as a 3DGS encoder or decoder according to some embodiments.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

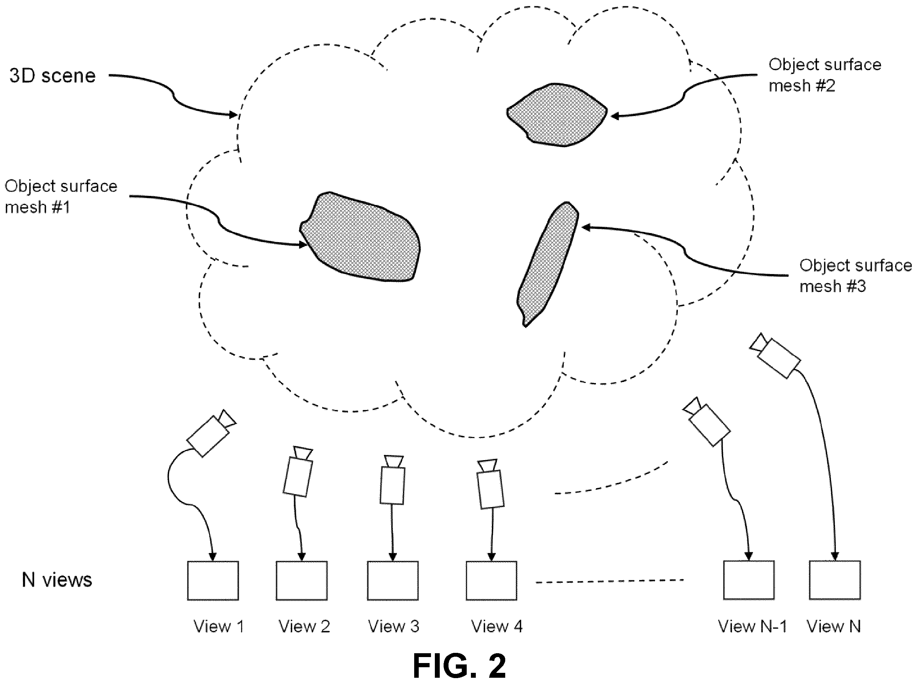

Example embodiments relate to providing a 3D Gaussian splatting (3DGS) scene representation that leverages prior knowledge of an explicit 3D surface representation, such as a 3D mesh, of one or more objects or portions of objects that make up the scene. FIG. 2 schematically illustrates the input data that is processed in an example embodiment. Specifically, the input may be a multi-view capture. The N different views may be captured by N cameras, or by a single camera capturing multiple views from different locations, or some combination of these techniques. This multi-view capure, which is the conventional input to 3DGS generation, is supplemented in example embodiments by a geometric modeling of some parts of the 3D scene. These parts may correspond to semantic objects, or semantic object parts, characterized by continuous surfaces.

The present disclosure describes systems and methods that leverage such additional input information to the 3DGS model generation process in order to provide an output that may be described as an object-based 3DGS model. In an example embodiment of such a model, 3DGS primitives constrained by the geometry of individual objects are labeled with the corresponding object ID. This labeling may enable further object-based manipulation or editing.

In an example embodiment, an explicit surface representation of *K* objects is provide as an input in addition to the multi-view capture of the 3D scene from *N* viewpoints, and these inputs are used for the generation of a 3DGS model. In some such embodiments, for initialization, Gaussian primitives are positioned on each object surface, together with those positioned on the sparse structure from motion (SfM) point cloud for the rest of the scene. Gaussians attached to individual objects are constrained to stay in the vicinity of their surface during refinement. Each set of Gaussians attached to an individual object is assigned a label with the object ID, which allows further object-based manipulation and editing of the 3DG scene representation.

The input to the generation of a conventional 3DGS model includes a multi-view capture from *N* viewpoints of the 3D scene, together with the corresponding camera parameters. In some embodiments, structure from motion (SfM) is used to estimate the camera parameters used to capture the views. The SfM process may generate a sparse point cloud, and the points in that point cloud may be used as the location of the initial Gaussian primitives, prior to refinement. A description of an example SfM process that may be used in some embodiments is described in J. L. Schönberger and J.-M. Frahm, "Structure-from-Motion Revisited", in Conference on Computer Vision and Pattern Recognition (CVPR), 2016.

As illustrated schematically in FIG. 2, an example embodiment uses as input not only the captured views, but also an explicit surface representation of *K* objects or portions of objects making up the scene. In some embodiments, the explicit surface representation may be a 3D mesh. However, other surface representations may alternatively be employed, such as triangle soups or dense point clouds.

Example embodiments may employ any of a variety of techniques for the dense surface reconstruction of the *K* considered objects. (Throughout the present disclosure, a reference to an object includes a portion of an object. For example, a surface reconstruction may correspond to only a portion of the complete surface of a physical object, and different surface reconstructions may correspond to different portions of the surface of an object.) Some embodiments use conventional photogrammetric techniques for surface reconstruction, such as the techniques described in Schönberger & Frahm.

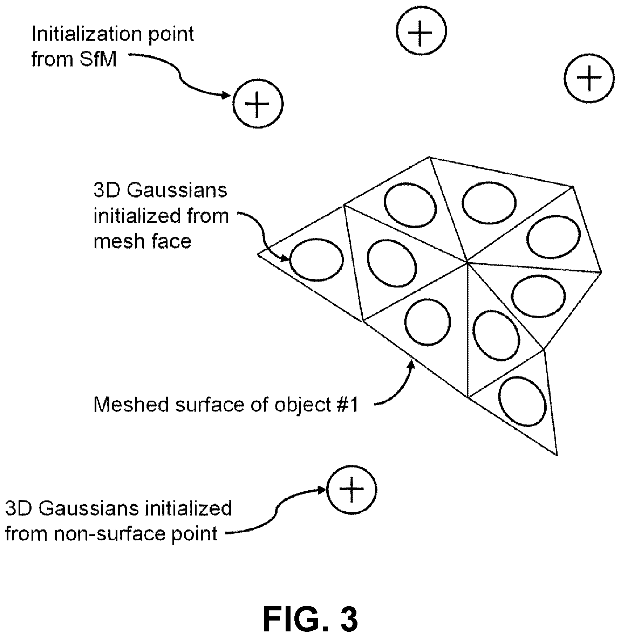

FIG. 3 is a schematic illustration showing two types of locations used to position Gaussians for initializing the 3DG model refinement. The first type of locations are locations on the surface of an object with modeled geometry. The second type of locations are locations at other positions throughout the scene, for example at point locations determined using an SfM process.

In an example in which the surfaces are represented using triangle meshes, the initial Gaussians may be located on the triangle faces. For example, a unique Gaussian splat primitive may be placed at each triangle center. Alternative surface sampling strategies may be used in other embodiments. In some such embodiments, more than one primitive may be located on each triangle, to increase the density. In other embodiments, the density may be decreased by locating a primitive on only a subset of the triangle faces.

In some cases, where point locations provided by an SfM process are used as locations for some of the initial Gaussians, some of those point locations may be on or near the object surfaces. In some such embodiments, those point locations may be discarded as being redundant with the positions derived from the surface models. In other such embodiments, those points may be included in the set of positions attached to an object.

In conventional 3DGS, as described for example in Kerbl et al., a refinement process is employed in which the positions and attributes of Gaussians are updated iteratively. In each iteration, the current 3DGS representation is rendered, and the resulting rendered images are compared to the training views in the captured dataset to generate a loss function 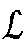 . The 3DGS representation is updated based on the results of the comparison in an effort to lower the loss function 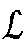 . The refinement process may include not only the updating of the positions and attributes of the Gaussians, but also the number of Gaussians. The initial set of Gaussians at sparse point locations may be progressively increased through a controlled densification process by means of splitting and cloning the Gaussians to better represent the scene.

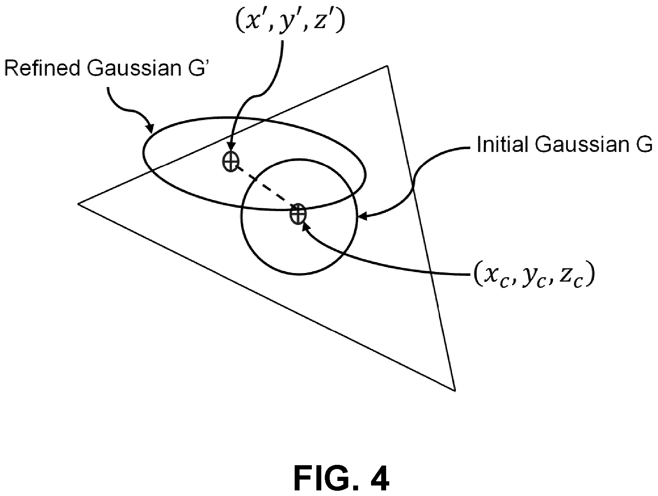

In some example embodiments, during the iterative refinement, it is permissible for the initial Gaussians attached to objects to be cloned or split. In some such embodiments, a constraint is imposed such that those Gaussians remain close to the surface they represent. FIG. 4 is a schematic illustration of an isotropic Gaussian primitive. Before running the refinement process, the Gaussian is positioned on a triangle of an object surface. After a given number of refinement iterations the position and attributes (such as shape, color, and transparency) of the Gaussian have been modified.

In some embodiments, this constraint on the displacement of a Gaussian with respect to the surface it is associated with is enforced by including, in the loss function 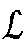 guiding the refinement process, a term 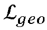 that is used to penalize the deviation from the surface for Gaussians attached to objects. The resulting loss function 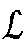 may then be a weighted sum of a loss function term 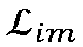 with the loss function term 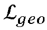 *.* The term 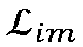 may be obtained using conventional techniques, as described in Kerbl et al., by comparing the rendered image to the training views in the input views dataset. This comparison may be made using a pixel-to-pixel difference, possibly combined with a D-SSIM structural dissimilarity term more related to human perception, or using other techniques. This first term enforces the fidelity of the rendered images to their counterpart in the input views training dataset. The resulting loss function may be expressed as follows: $L = \left(1-λ\right) {L}_{im} + {λL}_{geo}$

In example embodiments, the term 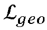 captures the distance between Gaussian primitives attached to the modeled object surfaces. In some embodiments, such distance may be obtained using the average *L₂* distances between the *X=(x,y,z)* positions of the Gaussians and their initial positions at the center of the triangles making up the mesh. The resulting loss function may be expressed as follows: ${L}_{geo} = \frac{1}{{N}_{G}} {\sum }_{k = 1}^{K} {\sum }_{j = 1}^{{T}_{k}} {\sum }_{i = 1}^{{N}_{k , j}} {\left‖{X}_{k , j}^{i}-{X}_{k , j}^{c}\right‖}_{2}$ where there are *K* objects, *Tₖ* triangles on the mesh modeling the surface of the *k^{th}* object, ${X}_{k , j}^{c}$ is the 3D position of the center of the *j^{th}* triangle belonging to the *k^{th}* object, there are *N_{k,j}* Gaussians originating from this triangle (there can be multiple after the densification steps during refinement, by splitting or cloning primitives), ${X}_{k , j}^{i}$ is the location of the *j^{th}* Gaussian from this subset, and *N_{G}* is the total number of Gaussians attached to an object surface. The weight *λ* balances the influence of rendering fidelity and attachment to surfaces. Different values of the weight *λ* may be used in different embodiments. Particular values of the weight *λ* may be determined empirically.

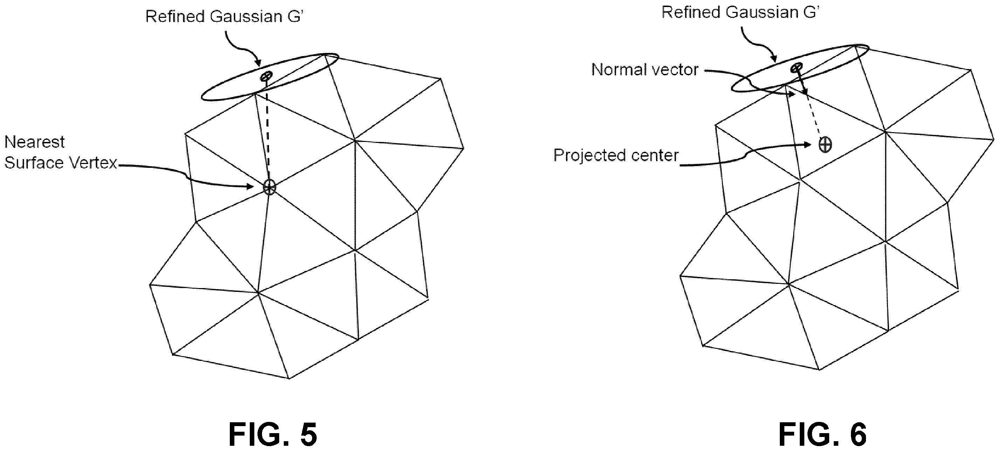

In some embodiments, as in the examples illustrated in FIGs. 5 and 6, the distance between an individual Gaussian and the corresponding surface is not computed with respect to a single triangle (that the Gaussian was initialized on) but with respect to the surface as a whole. In one such embodiment, as illustrated in FIG. 5, the nearest point (vertex) on the object mesh is first searched for, and its distance to the Gaussian is computed.

In another such embodiment, as illustrated in FIG. 6 the center of the Gaussian is projected onto the surface, and the distance is defined as the distance between the projected center and the Gaussian center. In this embodiment, a local estimation of the normal direction to the surface may be used to project along the normal direction. In some cases, the mesh vertices have normal vector attributes. In other cases, the normals to the faces are computed. An approximation of the surface normal may be performed by using an average of surface vertex/face normals in a local neighborhood.

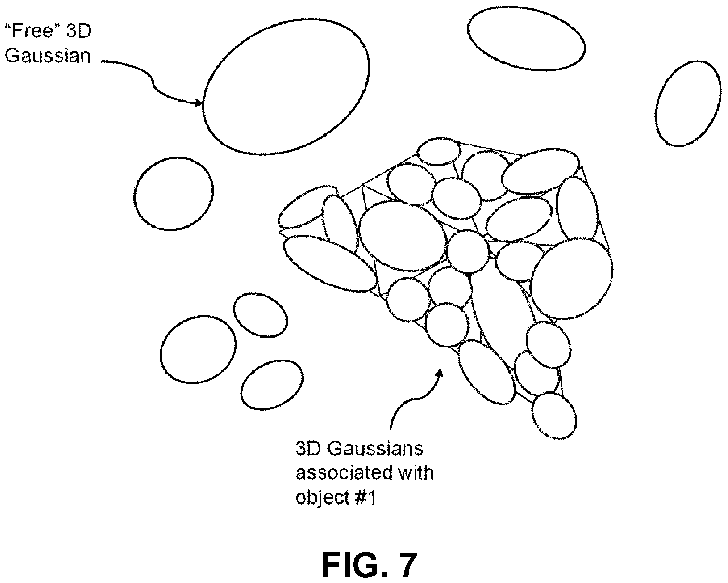

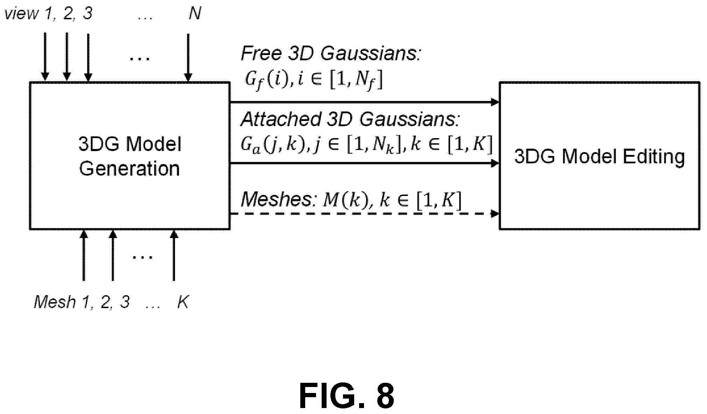

As illustrated schematically in FIG. 7, the final 3DGS model includes a set of *N_{f}* Gaussian primitives that are not attached specifically to any object, referred to herein as "free" primitives, together with *K* sets of "attached" Gaussian primitives, the set with index *k* containing *Nₖ* Gaussians attached to the *k^{th}* object, with a surface modeled by means of a mesh *M(k)* (or an alternative surface representation such as triangle soup or dense point clouds in other embodiments). To enable object-based editing and manipulation after encoding, transmission and decoding, the object labeling information may be tracked. An example of such tracking is illustrated schematically in FIG. 8.

In an example embodiment of such tracking, at the primitive level, an object label attribute is added and is encoded in the bitstream along with the shape, color and transparency attributes of a 3D Gaussian. In some embodiments, when the label is equal to 0, the Gaussian is a free primitive not associated with any object; otherwise, the attribute carries the index of the object.

In an example embodiment, the sequence parameter set, which defines properties for the entire sequence of 3DGS frames (for a dynamic model of time varying 3DGs), a flag such as an object_surface_labels_present_flag may be used to indicate whether some of the Gaussian primitives are attached to an underlying object surface model. The flag may be a Boolean that indicates, when equal to true, that some of the Gaussian primitives are attached to an underlying object surface model.

In some embodiments, a syntax element in the sequence parameter set, such as num_objects, is used to indicate the number of object surface models present. The syntax of one such syntax element may be as follows.

| | |
|---|---|
| seq_parameter_set() { | **Descriptor** |
| (...) | |
| **object_surface_labels_present_flag** | u(1) |
| if(object_surface_labels) | |
| **num_objects** | u(8) |
| (...) | |
| } | |

In this example, because 8 bits are used, there can be at most 256 identified objects. However, different embodiments may use a different number of bits for the num_objects parameter, allowing for different maximum numbers of objects.

In some embodiments, the surface models, as represented by the dotted arrow in FIG. 8, are explicitly transmitted in the bitstream along with the 3DG model. If a mesh representation is used, the MPEG V-DMC mesh compression format can be used to encode the meshes, though other formats may be used in other embodiments. The precise input surface modeling is preserved, but at the expense of additional data rate.

In other embodiments, the surface models are not explicitly encoded in the bitstream along with the 3D Gaussian information. Because the attached 3D Gaussians were constrained to stay in the neighborhood of the object surface during the refinement process, their positions can be considered as an implicit surface representation by means of a point cloud. This may be of a sufficient accuracy for some applications, e.g. where the object bounding box is required, even if it may have a lower accuracy than an explicit surface model such as a mesh.

Example embodiments enable object-based manipulation and editing of a 3D Gaussian scene model. For example, an object can be removed from the scene by removing the subset of attached Gaussians associated with an identifier of that object. An object from one 3D Gaussian model can be pasted into another 3D scene model. Collision detection (from object bounding box) may be implemented in interactive applications. Object-specific encoding/decoding controls may be applied, e.g., for encoding/decoding/reconstructing different objects (or parts of the scene) at different bitrates, levels of detail, and the like.

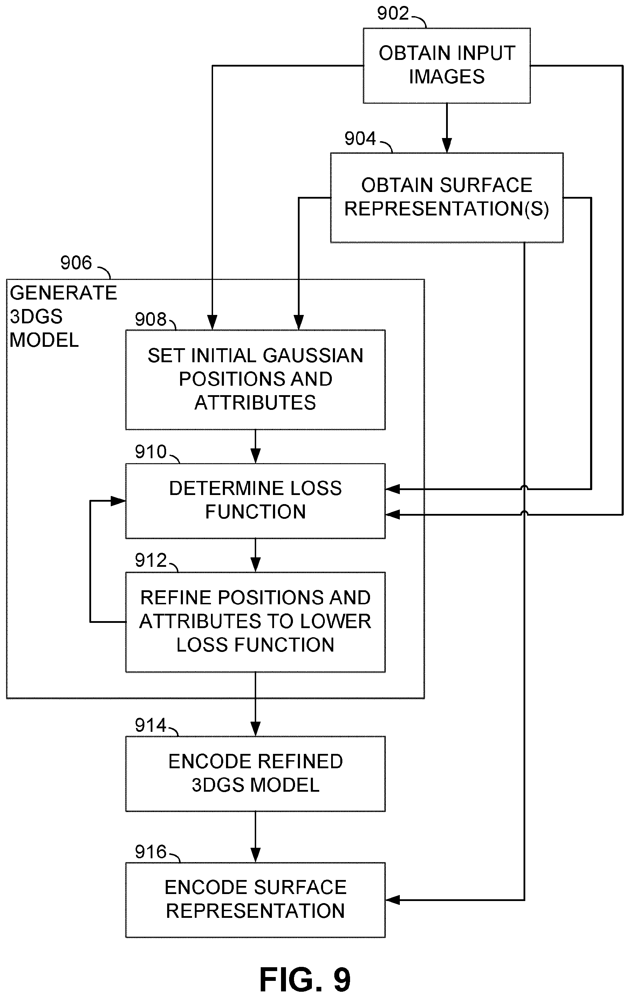

FIG. 9 is a flow diagram of an encoding method performed in some embodiments. At 902, a plurality of input images of a scene are obtained. At 904, at least a first representation of a first surface in the scene is obtained. Representations may also be obtained for additional surfaces in the scene, but for the sake of clarity, FIG. 9 illustrates processing using only one such surface representation. The surface representation may be, but is not limited to, a 3D mesh. In some cases, the surface representation may itself be generated using the input images obtained at 902, but this is not necessarily the case.

At 906, a 3D Gaussian splatting (3DGS) model of the scene is generated based on the input images and the first representation (and possibly other surface representations, in cases where additional surface representations are obtained). The 3DGS model includes a first set of Gaussian primitives associated with the first surface. These may be referred to as being "attached" to the first surface as described above. The generating of the scene includes constraining the Gaussian primitives in the first set to have positions in proximity to the first surface. In cases where surface representations of additional surfaces are also obtained, the generating of the scene may include constraining other sets of Gaussian primitives to have positions in proximity to their respective associated surfaces.

In some embodiments, the generating of the 3DGS model includes, at 908, setting initial positions for a plurality of Gaussian primitives. The Gaussian primitives in this example include a plurality of Gaussian primitives in the first set, and those Gaussian primitives in the first set may have initial positions on the first surface. At 910, a loss function is determined, where the loss function is based at least in part on a fidelity of the 3DGS model to the input images and on distances from the first surface to the Gaussian primitives in the first set. Where additional surface representations are used, the loss function may be further based on distances from those other surfaces to the Gaussian primitives in the respective sets of primitives.

In an example determination of a loss function, views of the 3DGS model at a particular step in the refinement process may be rendered from the same viewpoints as the original input images. The rendered views may be compared with those input images, with greater differences resulting in a greater value of the loss function. With respect to distances of the Gaussian primitives to their respective surfaces, greater distances likewise lead to a greater value of the loss function. In some embodiments, the distance between a surface and its associated Gaussian primitives is based on distances along respective normal directions between those primitives and the surface. In other embodiments, the distance between a surface and its associated Gaussian primitives is based on distances to respective nearest vertices on the surface or on some other defined point, such as nearest center of a face on the surface.

At 912, the positions and attributes of the Gaussian primitives are refined to lower the loss function. In some embodiments, this may be done by determining a gradient of the loss function and adjusting the positions and attributes using backpropagation according to the gradient, as described for example in Kerbl et al. The refinement may be performed iteratively. The refinement process may end in response to different criteria in different embodiments, the process may be complete once the loss function has been reduced to a satisfactory level (e.g. a threshold), once a certain number of iterations have been performed, once the back propagation process no longer leads to a reduction in the loss function, or according to some other criterion or combination of criteria.

In some embodiments, at 914, the refined 3DGS model is encoded, e.g. in a bitstream. In some such embodiments, the representations of one or more surfaces, as obtained at 904, are encoded in the same bitstream at 916. In other embodiments, the representations of the surface(s) are not encoded in the bitstream. In some embodiments, information is encoded in the bitstream that identifies which of the Gaussian primitives are in the first set, namely the set of Gaussian primitives that were constrained to have positions in proximity to the first surface. Where more than one surface is used, information may also be encoded in the bitstream indicating which of the Gaussian primitives were constrained to have positions in proximity to which other surfaces.

In some embodiments, in the encoding of the 3DGS model at 914, different bitrates, quantization parameters, levels of detail, levels of compression, or other coding parameters may be used for different sets of Gaussian primitives associated with different surfaces. For example, the positions and/or attributes of Gaussian primitives associated with some surfaces (e.g. surfaces of foreground objects) may be encoded with higher bitrates than those associated with other surfaces (e.g. surfaces or background objects) or those not associated with any particular surface.

In some embodiments, there is a set of Gaussian primitives that are not constrained to have positions in proximity to any surface in the scene. The refinement process may allow for the positions of those Gaussians to be adjusted without regard to their proximity to any surface. For example, the loss function may be independent of the distance between such Gaussians and any surface. In some such embodiments, information indicating which Gaussian primitives are in the set of "free" primitives may be encoded in the bitstream.

Some embodiments include an apparatus comprising one or more processors configured to perform a method such as that shown in FIG. 9.

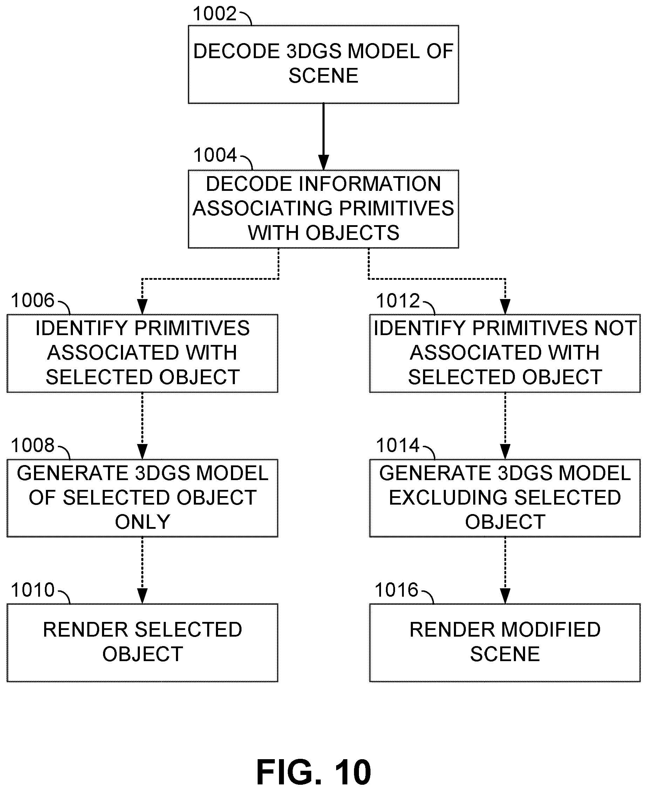

FIG. 10 is a flow chart of a method performed at a decoding device according to some embodiments. At 1002, an initial 3D Gaussian splatting, 3DGS, model of a scene is decoded from a bitstream. The model includes a plurality of Gaussian primitives. At 1004, information is decoded from the bitstream that associates at least a first set of the Gaussian primitives with a first object (and possibly associates additional Gaussian primitives with other respective objects).

In different embodiments, different actions may be taken based on the decoded information. In one embodiment, at 1006, Gaussian primitives that are associated with a selected object are identified. The object may have been selected, for example, based on user input. At 1008, an extracted 3DGS model of the selected object is generated using the associated Gaussian primitives. Different actions may be taken on the extracted 3DGS model. For example, in some embodiments, at 1010, the selected object may be rendered by rendering the extracted 3DGS model. In other embodiments, the extracted 3DGS model of the object may be stored for further editing, or it may be delivered to a client device, for example where the method is being performed by an intermediate server.

In some embodiments, at 1012, primitives that are not associated with the selected object are identified, and at 1014, a 3DGS model that excludes the selected object may be generated, resulting in a model of a scene in which the selected object has been removed. Different actions may be taken on the modified scene. For example, in some embodiments, at 1016, the modified scene is rendered (without the selected object). In other embodiments, the modified 3DGS model of the scene may be stored for further editing, or it may be delivered to a client device, for example where the method is being performed by an intermediate server.

### Example Systems

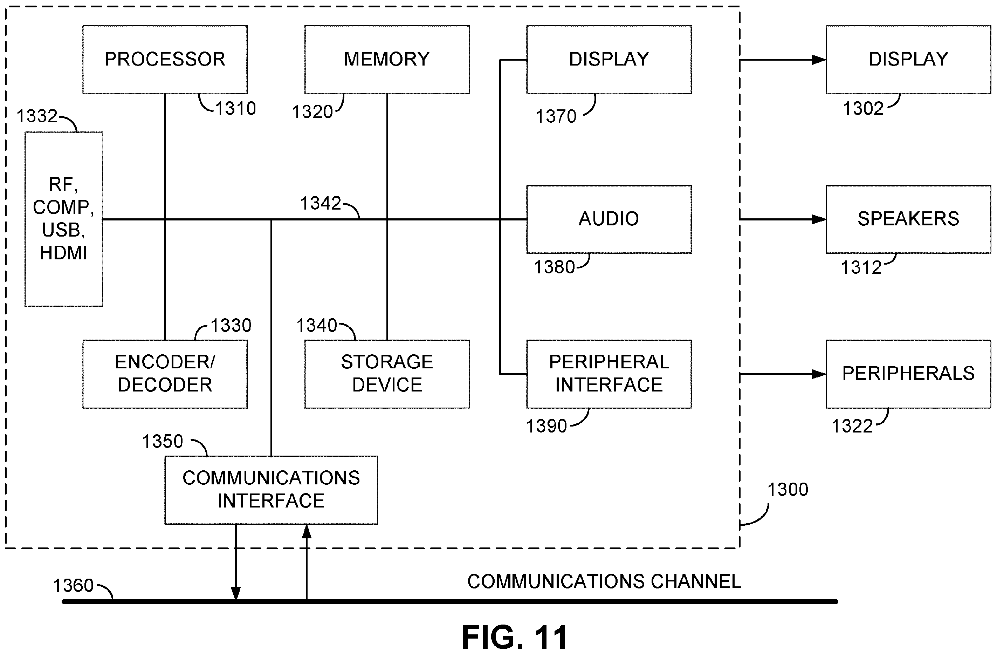

Some embodiments may be implemented on a system of one or more processors as illustrated in FIG. 11. FIG. 11 is a block diagram of an example of a system in which various aspects and embodiments are implemented. System 1300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further Embodiments

A method according to some embodiments comprises: obtaining a plurality of input images of a scene; obtaining at least a first representation of a first surface in the scene; and generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

An apparatus according to some embodiments comprises one or more processors configured to perform at least: obtaining a plurality of input images of a scene; obtaining at least a first representation of a first surface in the scene; and generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

In some embodiments, the first representation is a 3D mesh.

In some embodiments, generating the 3DGS model comprises: setting initial positions for a plurality of Gaussian primitives, the Gaussian primitives including a plurality of Gaussian primitives in the first set, the Gaussian primitives in the first set having initial positions on the first surface; and iteratively refining positions of the Gaussian primitives to lower a loss function, wherein the loss function is based at least in part on a fidelity of the 3DGS model to the input images and on distances from the first surface to the Gaussian primitives in the first set.

In some embodiments, the distances from the first surface to the Gaussian primitives in the first set are determined based on distances along respective normal directions to the first surface. In other embodiments, the distances from the first surface to the Gaussian primitives in the first set are determined based on distances to respective nearest vertices on the first surface.

Some embodiments further comprise encoding the 3DGS model in a bitstream. Some such embodiments further comprise encoding in the bitstream information identifying which of the the Gaussians are in the first set.

In some embodiments, the first representation is also encoded in the bitstream. In other embodiments, the first representation is not encoded in the bitstream.

Some embodiments further comprise: obtaining a second representation of a second surface in the scene; wherein the 3DGS model includes a second set of Gaussian primitives associated with the second surface; and wherein the generating of the 3DGS model further includes constraining the Gaussian primitives in the second set to have positions in proximity to the second surface.

In some embodiments, a third set of Gaussian primitives in the 3DGS model are not constrained to have positions in proximity to any surface in the scene.

A method according to some embodiments comprises: decoding from a bitstream an initial 3D Gaussian splatting, 3DGS, model of a scene, the model comprising a plurality of Gaussian primitives; decoding from the bitstream information associating a first set of the Gaussian primitives with a first object; and generating an extracted 3DGS model of the first object using the Gaussian primitives in the first set.

An apparatus according to some embodiments comprises one or more processors configured to perform at least: decoding from a bitstream an initial 3D Gaussian splatting, 3DGS, model of a scene, the model comprising a plurality of Gaussian primitives; decoding from the bitstream information associating a first set of the Gaussian primitives with a first object; and generating an extracted 3DGS model of the first object using the Gaussian primitives in the first set.

In some embodiments, the bitstream includes information associating a respective object label with each of the Gaussian primitives; wherein the information associating the first set of the Gaussian primitives with the first object comprises an object label that identifies the first object; wherein a second set of the Gaussian primitives is associated with an object label that identifies a second object; and wherein a third set of the Gaussian primitives is associated with an object label indicating that the Gaussians in the third set are not associated with any object.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
obtaining a plurality of input images of a scene;
obtaining at least a first representation of a first surface in the scene; and
generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

2. An apparatus comprising one or more processors configured to perform at least:
obtaining a plurality of input images of a scene;
obtaining at least a first representation of a first surface in the scene; and
generating a 3D Gaussian splatting, 3DGS, model of the scene based on the input images and the first representation, wherein the 3DGS model includes a first set of Gaussian primitives associated with the first surface, and wherein the generating of the scene includes constraining the Gaussian primitives in the first set to have positions in proximity to the first surface.

3. The method of claim 1 or the apparatus of claim 2, wherein the first representation is a 3D mesh.

4. The method of claim 1, or claim 3 as it depends from claim 1, or the apparatus of claim 2, or claim 3 as it depends from claim 2, wherein generating the 3DGS model comprises:
setting initial positions for a plurality of Gaussian primitives, the Gaussian primitives including a plurality of Gaussian primitives in the first set, the Gaussian primitives in the first set having initial positions on the first surface; and
iteratively refining positions of the Gaussian primitives to lower a loss function, wherein the loss function is based at least in part on a fidelity of the 3DGS model to the input images and on distances from the first surface to the Gaussian primitives in the first set.

5. The method of claim 4 as it depends from claim 1, or the apparatus of claim 4 as it depends from claim 2, wherein the distances from the first surface to the Gaussian primitives in the first set are determined based on distances along respective normal directions to the first surface.

6. The method of claim 4 as it depends from claim 1, or the apparatus of claim 4 as it depends from claim 2, wherein the distances from the first surface to the Gaussian primitives in the first set are determined based on distances to respective nearest vertices on the first surface.

7. The method of claim 1, or any of claims 3-6 as they depend from claim 1, or the apparatus of claim 2, or any of claims 3-6 as they depend from claim 2, further comprising encoding the 3DGS model in a bitstream.

8. The method of claim 7 as it depends from claim 1, or the apparatus of claim 7 as it depends from claim 2, further comprising encoding in the bitstream information identifying the Gaussians in the first set.

9. The method of claim 7 or 8 as they depends from claim 1, or the apparatus of claim 7 or 8 as they depend from claim 2, further comprising encoding the first representation in the bitstream.

10. The method of claim 7 or 8 as they depend from claim 1, or the apparatus of claim 7 or 8 as they depend from claim 2, wherein the first representation is not encoded in the bitstream.

11. The method of claim 1, or any of claims 3-10 as they depend from claim 1, or the apparatus of claim 2, or any of claims 3-10 as they depend from claim 2, further comprising:
obtaining a second representation of a second surface in the scene;
wherein the 3DGS model includes a second set of Gaussian primitives associated with the second surface; and
wherein the generating of the 3DGS model further includes constraining the Gaussian primitives in the second set to have positions in proximity to the second surface.

12. The method of claim 1, or any of claims 3-10 as they depend from claim 1, or the apparatus of claim 2, or any of claims 3-10 as they depend from claim 2, wherein a third set of Gaussian primitives in the 3DGS model are not constrained to have positions in proximity to any surface in the scene.

13. A method comprising:
decoding from a bitstream an initial 3D Gaussian splatting, 3DGS, model of a scene, the model comprising a plurality of Gaussian primitives;
decoding from the bitstream information associating a first set of the Gaussian primitives with a first object; and
generating an extracted 3DGS model of the first object using the Gaussian primitives in the first set.

14. An apparatus comprising one or more processors configured to perform at least:
decoding from a bitstream an initial 3D Gaussian splatting, 3DGS, model of a scene, the model comprising a plurality of Gaussian primitives;
decoding from the bitstream information associating a first set of the Gaussian primitives with a first object; and
generating an extracted 3DGS model of the first object using the Gaussian primitives in the first set.

15. The method of claim 13 or the apparatus of claim 14:
wherein the bitstream includes information associating a respective object label with each of the Gaussian primitives;
wherein the information associating the first set of the Gaussian primitives with the first object comprises an object label that identifies the first object;
wherein a second set of the Gaussian primitives is associated with an object label that identifies a second object; and
wherein a third set of the Gaussian primitives is associated with an object label indicating that the Gaussians in the third set are not associated with any object.
